(19) Europäisches Patentamt
European Patent Office
Office européen des brevets

(11) **EP 3 280 581 B1**

(12) **FASCICULE DE BREVET EUROPEEN**

(45) Date de publication et mention
de la délivrance du brevet:
**22.06.2022 Bulletin 2022/25**

(21) Numéro de dépôt: **16730445.0**

(22) Date de dépôt: **08.04.2016**

(51) Classification Internationale des Brevets (IPC):
**B29C 48/68** (2019.01)      **B29C 48/76** (2019.01)
**B29C 48/693** (2019.01)      B29B 7/42 (2006.01)
**B29C 48/375** (2019.01)

(52) Classification Coopérative des Brevets (CPC):
**B29B 7/425; B29B 7/428; B29B 7/7495;
B29B 7/842; B29C 48/022; B29C 48/2552;
B29C 48/387; B29C 48/6801; B29C 48/686;
B29C 48/69; B29C 48/693; B29C 48/761;**
B29C 48/2715; B29C 48/397; B29C 48/507

(86) Numéro de dépôt international:
**PCT/FR2016/050811**

(87) Numéro de publication internationale:
**WO 2016/162645 (13.10.2016 Gazette 2016/41)**

(54) **PROCÉDÉ ET SYSTÈME DE PRÉPARATION DE CAOUTCHOUC NATUREL DÉCONTAMINÉ**

VERFAHREN UND SYSTEM ZUR HERSTELLUNG VON DEKONTAMINIERTEM
NATURKAUTSCHUK

METHOD AND SYSTEM FOR THE PRODUCTION OF DECONTAMINATED NATURAL RUBBER

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **10.04.2015 FR 1553154**

(43) Date de publication de la demande:
**14.02.2018 Bulletin 2018/07**

(73) Titulaire: **Compagnie Générale des
Etablissements Michelin
63000 Clermont-Ferrand (FR)**

(72) Inventeurs:
• **DUSSILLOLS, Jérôme
63040 Clermont Ferrand Cedex 9 (FR)**

• **MERCERON, Jean-Luc
63200 Mozac (FR)**

(74) Mandataire: **Gandon-Pain, Sylvie
Manufacture Française des
Pneumatiques Michelin
CBS/CORP/J/PI - F35 - Ladoux
23, place des Carmes-Déchaux
63040 Clermont-Ferrand Cedex 9 (FR)**

(56) Documents cités:
**EP-A1- 0 492 425          WO-A1-99/56938
DE-A1-102013 106 337    JP-A- 2004 195 675**

**Description**

**DOMAINE DE L'INVENTION**

L'invention concerne un procédé de décontamination du caoutchouc naturel, permettant d'éliminer les contaminants pouvant être présents dans le caoutchouc naturel.
Les contaminants sont par exemple des végétaux, des plastiques, des granulats minéraux, des textiles.

**ETAT DE LA TECHNIQUE**

Le polyisoprène naturel, encore appelé caoutchouc naturel, est obtenu à partir de la saignée d'hévéa, en particulier de l'hevea Brasiliensis. Le produit récolté va être nettoyé, homogénéisé, coagulé et séché. La coagulation peut être une coagulation dite « naturelle » ou une coagulation dite « artificielle », par exemple chimiquement par ajout d'acide ou de sels. La coagulation peut intervenir avant les étapes de nettoyage et d'homogénéisation ou ultérieurement. Le procédé de traitement du caoutchouc naturel comprend conventionnellement des étapes d'élimination des contaminants :

- une décontamination primaire visant à éliminer les objets grossiers, principalement par lavage et broyage pour le caoutchouc naturel coagulé ou par filtration pour le caoutchouc naturel non coagulé ;
- une décontamination secondaire visant à éliminer les objets plus fins, traditionnellement réalisée par passage dans des crêpeuses.

Les crêpeuses sont des machines comprenant deux cylindres rainurés tournant entre lesquels passe le caoutchouc. Cette opération peut être répétée plusieurs fois jusqu'à l'obtention d'une feuille appelée « crêpe ».
Ensuite, le caoutchouc naturel sec et décontaminé est usuellement mis sous forme de pain ou de balle.
Lorsque le caoutchouc est destiné à la préparation de pneumatiques, il est primordial qu'il contienne aussi peu de contaminants que possible. D'une manière générale, les caoutchoucs naturels secs sont ainsi filtrés avant utilisation dans une composition de caoutchouc pour pneumatique.
L'objet de l'invention est d'utiliser un système de filtration adapté permettant la décontamination du caoutchouc naturel humide. Ce système peut notamment permettre de remplacer totalement les crêpeuses classiquement utilisées, permettant ainsi une meilleure maîtrise du procédé, l'obtention d'un caoutchouc naturel exempt de contamination d'une taille supérieure à celle de la maille du filtre, et un gain en volume occupé.
La filtration du caoutchouc naturel sec et traité avec un stabilisant est décrite dans le brevet EP 0 613 924. Ce brevet décrit particulièrement la stabilisation de caoutchouc naturel sec avec un stabilisant dans une extrudeuse chauffée avec une filtration en bout de l'extrudeuse à l'aide d'un filtre. Les inventeurs ont constaté que les extrudeuses à fourreau lisse, telles que décrites dans cette demande, ne peuvent pas être utilisées pour du caoutchouc naturel ayant des taux d'humidité supérieurs à 12% : le caoutchouc naturel glisse à la paroi du fourreau de l'extrudeuse et ne peut plus avancer dans l'extrudeuse pour permettre le passage de ce caoutchouc naturel à travers le filtre.
Le brevet FR 2 320 135 aborde la mise en œuvre du caoutchouc naturel humide dans une extrudeuse pour homogénéiser le caoutchouc naturel à la place des crêpeuses. Ce brevet revendique une extrudeuse avec une vis à moyeu conique, avec un pas progressif et des filets interrompus. Le caoutchouc naturel humide sort par des orifices positionnés sur le fourreau en bout de machine. Le caoutchouc naturel humide ne sort pas par une plaque filière en bout de vis comme avec une extrudeuse classique. Le fourreau est équipé de trous permettant d'évacuer le sérum de l'extrudeuse. Ce système n'est pas adaptable à de la filtration. De plus, les évacuations du sérum par les trous dans le fourreau de l'extrudeuse nécessitent beaucoup de nettoyage et de maintenance.
Des exemples d'extrudeuses utilisables dans le domaine des compositions de caoutchouc sont décrites dans les demandes EP 492 425, WO99/56938, DE 10 2013 106337.
La demande JP 2004/195675 décrit une extrudeuse comprenant un fourreau rainuré permettant de limiter un échauffement du plastique fondu. Les rainures peuvent être de formes et de dimensions variables.

**EXPOSE DE L'INVENTION**

L'invention a pour objet un système de filtration du caoutchouc naturel humide, pour éliminer les contaminants.
Le caoutchouc naturel est obtenu à partir de la saignée d'hévéa, en particulier de l'hévéa Brasiliensis. Les contaminants sont par exemple de l'écorce d'arbre, des branches et brindilles, des feuilles, des pétioles. Ces contaminants peuvent être aussi des granulats minéraux ou des fibres plastiques ou textiles.
Ce système de filtration permet d'obtenir un caoutchouc naturel humide, exempt de contaminants de taille supérieure à la maille du filtre utilisé. L'utilisation de caoutchouc naturel humide permet de consommer moins d'énergie pour éliminer les contaminants que la filtration du caoutchouc naturel sec. Ce système de filtration consiste à filtrer du caoutchouc naturel humide, en sortie d'une extrudeuse dont le fourreau est équipé de rainures qui permettent au caoutchouc naturel d'avancer dans l'extrudeuse.

Dans une variante préférée, une pompe à engrenage est installée entre la vis d'extrusion et le filtre.

## DESCRIPTION DES FIGURES

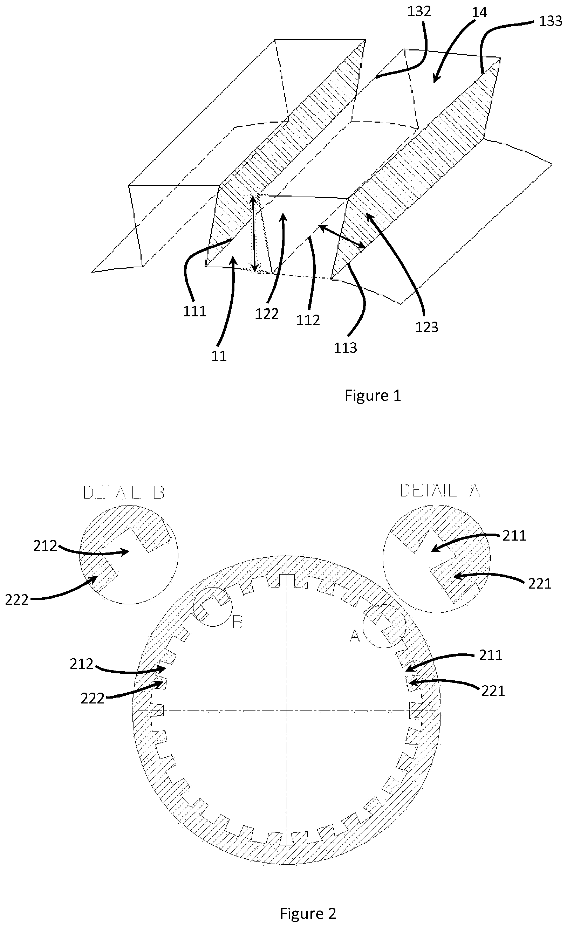

La figure 1 représente schématiquement en trois dimensions deux rainures consécutives séparées par une nervure. La rainure comprend

- une face de fond (14) délimitée par deux arêtes de fond (132, 133),
- deux faces latérales (122, 123) s'étendant vers l'intérieur depuis la face de fond (14), chacune étant délimitée par une arête de fond (132, 133) et une arête d'intersection (112, 113) avec la surface intérieure du fourreau.

Les rainures définissent des nervures dont les faces supérieures (11), délimitées par deux arêtes d'intersection (111, 112), constituent la surface intérieure du fourreau.

Sur la figure 1, la distance entre deux nervures consécutives est la distance entre les deux arêtes d'intersection (112) et (113), représentée par la double flèche. La distance entre deux rainures est la distance entre les deux arêtes d'intersection (111) et (112).

Sur la figure 1, la distance minimum séparant la face de fond (14) et le plan passant par les arêtes d'intersection (112) et (113) est représentée par la double flèche en surbrillance.

La figure 2 représente une vue de coupe du fourreau rainuré.

Dans la partie droite du demi-cercle (marqué A sur la figure), les rainures (211) sont en queue d'aronde. Dans la partie gauche du demi-cercle (marqué B sur la figure), les rainures (212) sont en forme de créneaux.

Les rainures (211, 212) définissent des nervures (221, 222).

La figure 3 représente le système utilisé.

Sur la figure 3A, le système comprend une extrudeuse (31) et un porte filtre (32) (filtre non visible sur la figure). Sur la figure 3B, le système comprend en outre une pompe à engrenage (33).

L'extrudeuse (31) comprend une trémie d'alimentation (311), un fourreau (312) rainuré (3121) et une monovis (313) comportant un moyeu et un filet qui s'étend radialement extérieurement relativement au moyeu.

En sortie d'extrudeuse, le système comprend un ou plusieurs filtre(s) installé(s) sur un porte filtre (32).

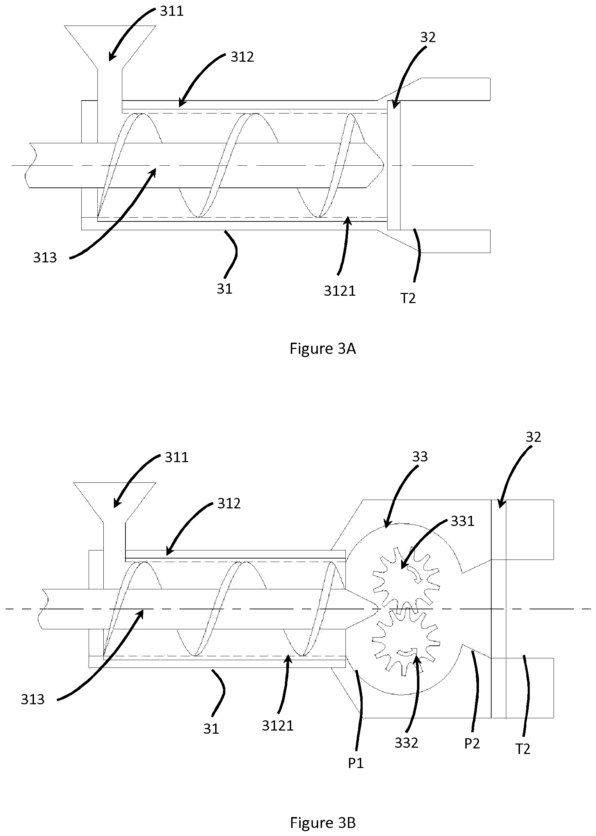

Dans la variante préférée, représentée sur la figure 3B, le système comprend en outre une pompe à engrenage externe (33).

Le système peut également comprendre des moyens de mesure, en particulier pour mesurer les pressions (P1, P2) et températures (T2).

## DESCRIPTION DETAILLEE DE L'INVENTION

L'invention a ainsi pour objet un procédé de préparation de caoutchouc naturel décontaminé, caractérisé en ce qu'il comprend une étape de décontamination par passage de coagulum de caoutchouc naturel humide, ayant un taux d'humidité supérieur à 12% en poids, dans un système comprenant une extrudeuse et un filtre installé en sortie de l'extrudeuse, l'extrudeuse comportant un fourreau rainuré, une vis qui est disposée dans le fourreau et qui comporte un moyeu et un filet qui s'étend radialement extérieurement relativement au moyeu,

un fourreau rainuré étant une structure à symétrie axiale comprenant dans son épaisseur des rainures débouchant sur la surface intérieure du fourreau,
chaque rainure comprenant:

- une face de fond délimitée par deux arêtes de fond,
- deux faces latérales s'étendant vers l'intérieur depuis la face de fond, chacune étant délimitée par une arête de fond et une arête d'intersection avec la surface intérieure du fourreau,

et caractérisé en ce que le fourreau est tel que, dans tout plan perpendiculaire à l'axe du fourreau, R, exprimé en mm, étant la distance entre le centre du fourreau et la surface intérieure du fourreau :

a. le ratio (longueur cumulée des ouvertures de rainure, exprimée en mm)/$(2\pi R)$, dénommé A, est au moins égal à 0,25 et au plus égal à 0,9;
b. le ratio (nombre de rainures/2R), dénommé B, est supérieur ou égal à 0,1 ;

c. le ratio (profondeur des rainures, exprimée en mm)/(2R), dénommé C, est supérieur à 0,02, et

d. le plan passant par les deux arêtes de fond formant avec chaque plan, passant par une arête de fond et une arête d'intersection, délimitant une face latérale, un angle δ au moins égal à 60° et au plus égal à 90°.

Au sens de la présente invention, les rainures définissent des nervures dont les faces supérieures, délimitées par deux arêtes d'intersection, constituent la surface intérieure du fourreau.

Au sens de la présente invention, l' « arête d'intersection » ou encore « arête d'intersection avec la surface intérieure du fourreau » (111, 112, 113) est l'arête entre la face latérale et la surface intérieure du fourreau.

Au sens de la présente invention, la « longueur cumulée des ouvertures de rainure » est la somme des distances, exprimées en mm, entre les deux arêtes d'intersection entre deux nervures.

Au sens de la présente invention, la « profondeur de la rainure » est définie par la distance minimum, exprimée en mm, séparant la face de fond et le plan passant par les arêtes d'intersection.

Au sens de la présente invention, la « distance minimum » est la distance minimum radiale par rapport à l'axe du fourreau.

Coagulum :

L'extrudeuse est alimentée avec un coagulum de caoutchouc naturel.

Par « coagulum de caoutchouc naturel », on entend, au sens de la présente invention, un caoutchouc naturel coagulé naturellement ou artificiellement.

Ce coagulum peut être obtenu par coagulation de latex liquide qui a été nettoyé, homogénéisé.

Il peut également être obtenu par coagulation naturelle (coagulum dit « fond de tasse ») ou par coagulation artificielle. Le coagulum peut alors être nettoyé et homogénéisé avant introduction dans l'extrudeuse.

Dans tous les cas, la forme préalable du coagulum (feuille, granulé, crêpes ...) n'a pas d'importance.

Ce coagulum de caoutchouc naturel est humide. Son taux d'humidité est avantageusement supérieur à 12%, plus avantageusement variant de 12% à 40%. Les pourcentages sont exprimés en poids, par rapport au poids total du coagulum.

Fourreau et vis d'extrusion :

L'extrudeuse comporte un fourreau rainuré et une vis qui est disposée dans le fourreau. Cette vis comporte un moyeu et un filet qui s'étend radialement extérieurement relativement au moyeu. Le diamètre du moyeu est avantageusement constant.

La vis peut comprendre un ou plusieurs filets, en particulier un ou deux filets. Le filet a avantageusement un pas régulier. L'extrudeuse est avantageusement une extrudeuse monovis. La vis d'extrusion permet de faire monter en pression le caoutchouc naturel humide.

Le fourreau peut être de forme cylindrique ou conique. Le fourreau rainuré est avantageusement une structure cylindrique.

Le fourreau présente une ouverture reliée à une trémie d'alimentation permettant l'introduction du coagulum humide. La vis d'extrusion permet le transport du caoutchouc de l'ouverture d'entrée vers l'extrémité du fourreau ouverte sur le filtre.

Selon l'un quelconque des modes de réalisation de l'invention, le fourreau comprend de préférence dans la zone d'alimentation une ou plusieurs ouvertures destinées à évacuer hors du fourreau l'eau qui peut être expulsée du coagulum lors de la montée en pression dans le fourreau. La zone d'alimentation est la zone qui se trouve sous l'ouverture de la trémie. Les ouvertures destinées à évacuer l'eau peuvent se présenter sous la forme de fente ou de trou circulaire.

Le fourreau est avantageusement tel que A est au moins égal à 0,3 et au plus égal à 0,7. Plus particulièrement, A est au moins égal à 0,45 et au plus égal à 0,55.

Dans tout plan perpendiculaire à l'axe du cylindre, la distance entre les deux arêtes d'intersection entre deux nervures est avantageusement de 8 à 15 mm, pour un diamètre intérieur du fourreau, 2R, de 60 à 230 mm.

Dans tout plan perpendiculaire à l'axe du cylindre, la profondeur des rainures est avantageusement de 2 à 10 mm, pour un diamètre intérieur du fourreau, 2R, de 60 à 230 mm.

Les rainures peuvent être sous la forme de créneau ou en queue d'aronde. Ainsi, chaque rainure est avantageusement de forme trapézoïdale, la grande base du trapèze formant le fond de la rainure, les côtés du trapèze adjacents à la grande base formant les faces latérales de la rainure, la hauteur du trapèze étant la profondeur de la rainure.

En particulier, le fond des rainures est un arc d'un cercle $C_R$, et le ratio C est calculé par la formule (I)

$$\frac{D_{extF} - D_{intF}}{D_{intF}} > 0,02 \qquad (I)$$

$D_{intF}$ étant le diamètre de la surface intérieure du fourreau, soit 2R
$D_{extR}$ étant le diamètre du cercle $C_R$ qui a pour centre l'axe du moyeu,

Les rainures du fourreau sont avantageusement parallèles à l'axe du fourreau.
Les rainures du fourreau sont avantageusement hélicoïdales.

Filtre :

Le système comprend, en sortie d'extrudeuse, un ou plusieurs filtre(s), avantageusement porté par un porte filtre (32), permettant de retenir les contaminants.
Au sens de la présente invention, « en sortie de l'extrudeuse » désigne à la suite de la vis d'extrusion.
Le filtre est tout moyen de filtration adapté. Le filtre permet avantageusement une filtration des contaminants de taille supérieure à 1 mm, avantageusement supérieure à 500 $\mu$m, plus avantageusement supérieure à 100 $\mu$m.
Il peut en particulier s'agir d'un ou plusieurs filtres à maille, dont la taille est choisie en fonction de la maille de filtration, installés sur un porte filtre. La taille de la maille varie avantageusement de 100 $\mu$m à 1 mm. Le cas échéant, on pourra disposer plusieurs filtres à la suite l'un de l'autre. Les filtres peuvent ensuite facilement être changés au cours du procédé par un système adapté, de manière continue ou discontinue.

Pompe à engrenage

Dans une variante préférée, le système comprend également, en sortie d'extrudeuse, avant le filtre, une pompe à engrenage (33).
On utilise avantageusement une pompe à engrenage simple (33) comprenant deux roues dentées (331, 332) côte à côte et s'engrenant (et tournant donc en sens opposé). Avec une extrudeuse lorsque la pression de filtration augmente le débit à filtrer diminue fortement. En présence de la pompe à engrenage, le débit à filtrer dépend de la cylindrée et de la vitesse de la pompe à engrenage et est ainsi rendu beaucoup moins dépendant de la pression. La pompe à engrenage permet donc une meilleure stabilité du débit en fonction de la pression de filtration de la pompe à engrenage et ainsi, pour un même dimensionnement de filtre, l'utilisation de la pompe à engrenage augmente le débit de filtration indépendamment de la pression de filtration. Autrement dit, la pompe à engrenage permet de réduire le dimensionnement du système pour filtrer le même débit.
La pompe à engrenage est dimensionnée pour pomper du caoutchouc naturel humide et pour monter en pression le caoutchouc naturel à filtrer à travers le filtre.
Le débit global d'extrusion varie avantageusement de 100 kg/h à 5 t/h.
La trémie d'alimentation est avantageusement en contact direct avec l'extérieur et ainsi le coagulum est alimenté à température et pression ambiantes.
La pression en tête d'extrudeuse varie avantageusement de 10 à 100 bars.
En sortie du système, la température (T2) du caoutchouc décontaminé varie avantageusement de 80 à 95°C.
Le cas échéant, l'extrudeuse peut comprendre des moyens de chauffage ou de refroidissement. En sortie du système, c'est-à-dire après le filtre, on peut prévoir tout système permettant d'obtenir la forme recherchée.
L'invention a également pour objet un procédé de traitement de caoutchouc naturel, caractérisé en ce qu'il comprend les étapes successives suivantes :

   a. Nettoyage, homogénéisation et coagulation du caoutchouc naturel ;
   b. Décontamination par le procédé selon l'invention ;
   c. Séchage du caoutchouc naturel décontaminé.

La coagulation peut être naturelle ou artificielle.
Le caoutchouc naturel peut être soit traité sous sa forme liquide ou solide. Dans le premier cas, le caoutchouc naturel, liquide (appelé latex), est nettoyé, homogénéisé puis coagulé. Dans le deuxième cas, le latex est coagulé et le coagulum est nettoyé, homogénéisé.
Le caoutchouc naturel décontaminé est avantageusement séché jusqu'à un taux d'humidité inférieur à 0,8%.
Le procédé peut également comprendre des étapes de broyage.
L'invention a également pour objet un système comprenant une extrudeuse, un filtre, et éventuellement une pompe à engrenage, selon la revendication 15.

**Revendications**

1. Procédé de préparation de caoutchouc naturel décontaminé, qui comprend une étape de décontamination par passage de coagulum de caoutchouc naturel humide, ayant un taux d'humidité supérieur à 12% en poids, dans un système comprenant une extrudeuse (31) et un filtre (32) installé en sortie de l'extrudeuse (31),

   l'extrudeuse (31) comportant un fourreau (312) rainuré (3121), une vis (313) qui est disposée dans le fourreau (312) et qui comporte un moyeu et un filet qui s'étend radialement extérieurement relativement au moyeu, un fourreau (312) rainuré (3121) étant une structure à symétrie axiale comprenant dans son épaisseur des rainures (211, 212) débouchant sur la surface intérieure du fourreau (312), chaque rainure (211, 212) comprenant

   - une face de fond (14) délimitée par deux arêtes de fond (132,133),
   - deux faces latérales (122, 123) s'étendant vers l'intérieur depuis la face de fond (14), chacune étant délimitée par une arête de fond (132, 133) et une arête d'intersection (112, 113) avec la surface intérieure du fourreau (312),

   le procédé étant **caractérisé en ce que** le fourreau (312) est tel que, dans tout plan perpendiculaire à l'axe du fourreau (312), R, exprimé en mm, étant la distance entre le centre du fourreau (312) et la surface intérieure du fourreau (312) :

   a. le ratio (longueur cumulée des ouvertures de rainure, exprimée en mm )/($2\pi R$), dénommé A, est au moins égal à 0,25 et au plus égal à 0,9;
   b. le ratio (nombre de rainures/2R), dénommé B, est supérieur ou égal à 0,1 ;
   c. le ratio (profondeur des rainures, exprimé en mm)/(2R), dénommé C, est supérieur à 0,02, et
   d. le plan passant par les deux arêtes de fond (132,133) formant avec chaque plan, passant par une arête de fond (132, 133) et une arête d'intersection (112, 113), délimitant une face latérale (122, 123), un angle $\delta$ au moins égal à 60° et au plus égal à 90.

2. Procédé selon la revendication 1 **caractérisé en ce que** le fourreau (312) rainuré (3121) est une structure cylindrique.

3. Procédé selon l'une quelconque des revendications 1 à 2, **caractérisé en ce que** A est au moins égal à 0,3 et au plus égal à 0,7, de préférence A est au moins égal 0,45 et au plus égal à 0,55.

4. Procédé selon l'une quelconque des revendications précédentes, **caractérisé en ce que** chaque rainure (211, 212) est de forme trapézoïdale, la grande base du trapèze formant le fond (14) de la rainure (211, 212), les côtés du trapèze adjacents à la grande base formant les parois latérales (122, 123) de la rainure (211, 212), la hauteur du trapèze étant la profondeur de la rainure (211, 212).

5. Procédé selon l'une quelconque des revendications précédentes **caractérisé en ce que** le fond (14) des rainures (211, 212) est un arc d'un cercle $C_R$, et le ratio C est calculé par la formule (I)

$$\frac{D_{extF} - D_{intF}}{D_{intF}} > 0,02 \qquad (I)$$

   $D_{intF}$ étant le diamètre de la surface intérieure du fourreau (312), soit 2R
   $D_{extR}$ étant le diamètre du cercle $C_R$ qui a pour centre l'axe du moyeu.

6. Procédé selon l'une quelconque des revendications précédentes **caractérisé en ce que** les rainures (211, 212) du fourreau (312) sont parallèles à l'axe du fourreau (312).

7. Procédé selon l'une quelconque des revendications 1 à 5 **caractérisé en ce que** les rainures (211, 212) du fourreau (312) sont hélicoïdales.

8. Procédé selon l'une quelconque des revendications précédentes, **caractérisé en ce que** le filtre (32) permet une filtration des contaminants de taille supérieure à 1 mm, avantageusement supérieure à 500 $\mu$m, plus avantageusement supérieure à 100 $\mu$m.

9. Procédé selon l'une quelconque des revendications précédentes, **caractérisé en ce que** le filtre (32) est un porte filtre comprenant un ou plusieurs filtres à maille.

10. Procédé selon l'une quelconque des revendications précédentes, **caractérisé en ce que** le système comprend également, en sortie d'extrudeuse (31), avant le filtre (32), une pompe à engrenage (33).

11. Procédé selon l'une quelconque des revendications précédentes, **caractérisé en ce que** le diamètre du moyeu est constant.

12. Procédé selon l'une quelconque des revendications précédentes, **caractérisé en ce que** l'extrudeuse (31) est une extrudeuse monovis, de préférence une extrudeuse monovis dont le filet a un pas régulier.

13. Procédé selon l'une quelconque des revendications précédentes, **caractérisé en ce que** l'extrudeuse (31) est alimentée avec un coagulum de caoutchouc naturel humide, ayant un taux d'humidité variant de 12% à 40%.

14. Procédé de traitement de caoutchouc naturel, **caractérisé en ce qu'**il comprend les étapes successives suivantes :

   a. Nettoyage, homogénéisation, et coagulation du caoutchouc naturel ;
   b. Décontamination par le procédé tel que défini à l'une quelconque des revendications 1 à 13 ;
   c. Séchage du caoutchouc naturel décontaminé.

15. Système comprenant une extrudeuse (31) à fourreau (312) rainurée (3121), un filtre (32) installé en sortie de l'extrudeuse (31) et éventuellement une pompe à engrenage (33), l'extrudeuse (31) comportant un fourreau (312) rainuré (3121), une vis (313) qui est disposée dans le fourreau (312) et qui comporte un moyeu et un filet qui s'étend radialement extérieurement relativement au moyeu,

   un fourreau (312) rainuré (3121) étant une structure à symétrie axiale, de préférence cylindrique, comprenant dans son épaisseur des rainures (211, 212) débouchant sur la surface intérieure du fourreau (312), chaque rainure (211, 212) comprenant :

   - une face de fond (14) délimitée par deux arêtes de fond (132,133),
   - deux faces latérales (122, 123) s'étendant vers l'intérieur depuis la face de fond (14), chacune étant délimitée par une arête de fond (132, 133) et une arête d'intersection (112, 113) avec la surface intérieure du fourreau (312),

   **caractérisé en ce que** le fourreau (312) est tel que, dans tout plan perpendiculaire à l'axe du fourreau (312), R, exprimé en mm, étant la distance entre le centre du fourreau (312) et la surface intérieure du fourreau (312) :

   a. le ratio (longueur cumulée des ouvertures de rainure, exprimée en mm )/(2πR), dénommé A, est au moins égal à 0,25 et au plus égal à 0,9 , de préférence est au moins égal à 0,3 et au plus égal à 0,7 , plus préférentiellement est au moins égal 0,45 et au plus égal à 0,55;
   b. le ratio (nombre de rainures/2R), dénommé B, est supérieur ou égal à 0,1 ;
   c. le ratio (profondeur des rainures, exprimé en mm)/(2R), dénommé C, est supérieur à 0,02, et
   d. le plan passant par les deux arêtes de fond (132,133) formant avec chaque plan, passant par une arête de fond (132, 133) et une arête d'intersection (112, 113), délimitant une face latérale (122, 123), un angle δ au moins égal à 60° et au plus égal à 90°.

**Patentansprüche**

1. Verfahren zur Herstellung von dekontaminiertem Naturkautschuk, umfassend einen Schritt des Dekontaminierens durch Leiten von Koagulum von feuchtem Naturkautschuk mit einem Feuchtigkeitsgehalt von mehr als 12 Gew.-% in ein System, das einen Extruder (31) und einen Filter (32), der am Auslauf des Extruders (31) installiert ist, umfasst, der Extruder (31) aufweisend ein genutetes (3121) Gehäuse (312), eine Schnecke (313), die im Gehäuse (312) angeordnet ist und die eine Nabe und einen Gang aufweist, der sich bezogen auf die Nabe radial außerhalb erstreckt,

   wobei ein genutetes (3121) Gehäuse (312) eine Struktur mit axialer Symmetrie ist, die in ihrer Dicke Nuten (211, 212) umfasst, die zur Innenfläche des Gehäuses (312) offen sind,

jede Nut (211, 212) umfassend

- eine Bodenfläche (14), die von zwei Bodenkanten (132, 133) begrenzt ist,
- zwei Seitenflächen (122, 123), die sich von der Bodenfläche (14) nach innen erstrecken, wobei jede von einer Bodenkante (132, 133) und einer Schnittkante (112, 113) mit der Innenfläche des Gehäuses (312) begrenzt ist,

wobei das Verfahren **dadurch gekennzeichnet ist, dass** das Gehäuse (312) so beschaffen ist, dass in jeder Ebene senkrecht zur Achse des Gehäuses (312), wobei R, in mm ausgedrückt, der Abstand zwischen der Mitte des Gehäuses (312) und der Innenfläche des Gehäuses (312) ist:

a. das Verhältnis (kumulierte Länge der Nutöffnungen, in mm ausgedrückt)/$(2\pi R)$, A genannt, mindestens gleich 0,25 und höchstens gleich 0,9 ist;
b. das Verhältnis (Anzahl von Nuten/2R), B genannt, größer als oder gleich 0,1 ist;
c. das Verhältnis (Tiefe der Nuten, in mm ausgedrückt)/(2R), C genannt, größer als 0,02 ist, und
d. wobei die Ebene, die durch die zwei Bodenkanten (132, 133) verläuft, mit jeder Ebene, die durch eine Bodenkante (132, 133) und eine Schnittkante (112, 113) verläuft, die eine Seitenfläche (122, 123) begrenzen, einen Winkel $\delta$ bildet, der mindestens gleich 60° und höchstens gleich 90° ist.

2. Verfahren nach Anspruch 1, **dadurch gekennzeichnet, dass** das genutete (3121) Gehäuse (312) eine zylindrische Struktur ist.

3. Verfahren nach einem der Ansprüche 1 bis 2, **dadurch gekennzeichnet, dass** A mindestens gleich 0,3 und höchstens gleich 0,7 ist, dass A vorzugsweise mindestens gleich 0,45 und höchstens gleich 0,55 ist.

4. Verfahren nach einem der vorhergehenden Ansprüche, **dadurch gekennzeichnet, dass** jede Nut (211, 212) trapezförmig ist, wobei die große Basis des Trapezes den Boden (14) der Nut (211, 212) bildet, die Seiten des Trapezes, die an die große Basis angrenzen, die Seitenwände (122, 123) der Nut (211, 212) bilden, wobei die Höhe des Trapezes die Tiefe der Nut (211, 212) ist.

5. Verfahren nach einem der vorhergehenden Ansprüche, **dadurch gekennzeichnet, dass** der Boden (14) der Nuten (211, 212) ein Bogen eines Kreises $C_R$ ist und das Verhältnis C durch die folgende Formel (I) berechnet wird:

$$\frac{DextF - DintF}{DintF} > 0{,}02 \qquad\qquad (\mathrm{I})$$

wobei $D_{intF}$ der Durchmesser der Innenfläche des Gehäuses (312) ist, bzw. 2R
wobei $D_{extR}$ der Durchmesser des Kreises $C_R$ ist, dessen Mitte die Achse der Nabe ist.

6. Verfahren nach einem der vorhergehenden Ansprüche, **dadurch gekennzeichnet, dass** die Nuten (211, 212) des Gehäuses (312) parallel zur Achse des Gehäuses (312) verlaufen.

7. Verfahren nach einem der Ansprüche 1 bis 5, **dadurch gekennzeichnet, dass** die Nuten (211, 212) des Gehäuses (312) spiralförmig sind.

8. Verfahren nach einem der vorhergehenden Ansprüche, **dadurch gekennzeichnet, dass** der Filter (32) eine Filterung der Verunreinigungen mit einer Größe über 1 mm, vorteilhafterweise über 500 $\mu$m, besser noch über 100 $\mu$m gestattet.

9. Verfahren nach einem der vorhergehenden Ansprüche, **dadurch gekennzeichnet, dass** der Filter (32) ein Filterträger ist, der einen oder mehrere Maschenfilter umfasst.

10. Verfahren nach einem der vorhergehenden Ansprüche, **dadurch gekennzeichnet, dass** das System am Extruderauslauf (31) vor dem Filter (32) ebenfalls eine Zahnradpumpe (33) umfasst.

11. Verfahren nach einem der vorhergehenden Ansprüche, **dadurch gekennzeichnet, dass** der Durchmesser der Nabe konstant ist.

**12.** Verfahren nach einem der vorhergehenden Ansprüche, **dadurch gekennzeichnet, dass** der Extruder (31) ein Einschneckenextruder ist, vorzugsweise ein Einschneckenextruder, dessen Gang eine regelmäßige Steigung aufweist.

**13.** Verfahren nach einem der vorhergehenden Ansprüche, **dadurch gekennzeichnet, dass** der Extruder (31) mit einem Koagulum von feuchtem Naturkautschuk mit einem Feuchtigkeitsgehalt, der von 12 % bis 40 % variiert, beschickt wird.

**14.** Verfahren zur Verarbeitung von Naturkautschuk, **dadurch gekennzeichnet, dass** es die folgenden aufeinanderfolgenden Schritte aufweist:

    a. Reinigen, homogenisieren und Koagulieren des Naturkautschuks;
    b. Dekontaminieren durch das Verfahren nach einem der Ansprüche 1 bis 13;
    c. Trocknen des dekontaminierten Naturkautschuks.

**15.** System umfassend einen Extruder (31) mit einem genuteten (3121) Gehäuse (312), einen Filter (32), der am Auslauf des Extruders (31) installiert ist, und eventuell eine Zahnradpumpe (33), der Extruder (31) aufweisend ein genutetes (3121) Gehäuse (312), eine Schnecke (313), die im Gehäuse (312) angeordnet ist und die eine Nabe und einen Gang aufweist, der sich bezogen auf die Nabe radial außerhalb erstreckt,

wobei ein genutetes (3121) Gehäuse (312) eine vorzugsweise zylindrische Struktur mit axialer Symmetrie ist, die in ihrer Dicke Nuten (211, 212) umfasst, die zur Innenfläche des Gehäuses (312) offen sind,
wobei jede Nut (211, 212) Folgendes umfasst:

    - eine Bodenfläche (14), die von zwei Bodenkanten (132, 133) begrenzt ist,
    - zwei Seitenflächen (122, 123), die sich von der Bodenfläche (14) nach innen erstrecken, wobei jede von einer Bodenkante (132, 133) und einer Schnittkante (112, 113) mit der Innenfläche des Gehäuses (312) begrenzt ist,

und **dadurch gekennzeichnet, dass** das Gehäuse (312) so beschaffen ist, dass in jeder Ebene senkrecht zur Achse des Gehäuses (312), wobei R, in mm ausgedrückt, der Abstand zwischen der Mitte des Gehäuses (312) und der Innenfläche des Gehäuses (312) ist:

    a. das Verhältnis (kumulierte Länge der Nutöffnungen, in mm ausgedrückt)/(2πR), A genannt, mindestens gleich 0,25 und höchstens gleich 0,9, vorzugsweise mindestens gleich 0,3 und höchstens gleich 0,7, besser noch mindestens gleich 0,45 und höchstens gleich 0,55 ist;
    b. das Verhältnis (Anzahl von Nuten/2R), B genannt, größer als oder gleich 0,1 ist;
    c. das Verhältnis (Tiefe der Nuten, in mm ausgedrückt)/(2R), C genannt, größer als 0,02 ist, und
    d. wobei die Ebene, die durch die zwei Bodenkanten (132, 133) verläuft, mit jeder Ebene, die durch eine Bodenkante (132, 133) und eine Schnittkante (112, 113) verläuft, die eine Seitenfläche (122, 123) begrenzen, einen Winkel δ bildet, der mindestens gleich 60° und höchstens gleich 90° ist.

## Claims

**1.** Method for preparation of decontaminated natural rubber, that comprises a decontamination step in which wet natural rubber coagulum with a humidity level greater than 12% by weight passes through a system comprising an extruder (31) and a filter (32) installed at the extruder (31) outlet,

the extruder (31) comprising a grooved (3121) sheath (312), a screw (313) arranged in the sheath (312) and comprising a hub and a thread which extends radially outwardly relative to the hub,
a grooved (3121) sheath (312) having an axially symmetrical structure comprising in its thickness grooves (211, 212) opening on the inner surface of the sheath (312),
each groove (211, 212) comprising

    - a bottom face (14) delimited by two bottom ridges (132, 133),
    - two side faces (122, 123) extending towards the inside from the bottom face (14), each being delimited by a bottom ridge (132, 133) and a ridge (112, 113) intersecting the inner surface of the sheath (312),

the process being **characterized in that** the sheath (312) is such that, in any plane perpendicular to the axis of the sheath (312), R expressed in mm being the distance between the sheath (312) centre and the inner surface of the sheath (312):

> a. the ratio (total length of groove openings expressed in mm )/($2\pi R$), designated A, is at least equal to 0.25 and at most equal to 0.9;
> b. the ratio (number of grooves/2R), designated B, is greater than or equal to 0.1;
> c. the ratio (depth of grooves expressed in mm)/(2R), designated C, is greater than 0.02, and
> d. the plane passing through the two bottom ridges (132, 133) forming, with each plane passing through a bottom ridge (132, 133) and an intersection ridge (112, 113) delimiting a side face (122, 123), an angle $\delta$ at least equal to 60° and at most equal to 90°.

2. Method according to claim 1, **characterized in that** the grooved (3121) sheath (312) is a cylindrical structure.

3. Method according to any of claims 1 to 2, **characterized in that** A is at least equal to 0.3 and at most equal to 0.7, preferably A is at least equal to 0.45 and at most equal to 0.55.

4. Method according to any of the preceding claims, **characterized in that** each groove (211, 212) is trapezoid in form, the large base of the trapezium forming the bottom (14) of the groove (211, 212), the sides of the trapezium adjacent to the large base forming the side walls (122, 123) of the groove (211, 212), the height of the trapezium being the depth of the groove (211, 212).

5. Method according to any of the preceding claims, **characterized in that** the bottom (14) of the grooves (211, 212) is an arc of circle $C_R$ and the ratio C is calculated by the formula (I)

$$\frac{D_{extF} - D_{intF}}{D_{intF}} > 0.02 \qquad (I)$$

$D_{intF}$ being the diameter of the inner surface of the sheath (312), or 2R
$D_{extR}$ being the diameter of circle $C_R$, the centre of which is the hub axis.

6. Method according to any of the preceding claims, **characterized in that** the grooves (211, 212) of the sheath (312) are parallel to the axis of the sheath (312).

7. Method according to any of claims 1 to 5, **characterized in that** the grooves (211, 212) of the sheath (312) are helical.

8. Method according to any of the preceding claims, **characterized in that** the filter (32) allows filtration of contaminants of size greater than 1 mm, advantageously greater than 500 $\mu$m, more advantageously greater than 100 $\mu$m.

9. Method according to any of the preceding claims, **characterized in that** the filter (32) is a filter carrier comprising one or more mesh filters.

10. Method according to any of the preceding claims, **characterized in that** the system also comprises a gear pump (33) at the extruder (31) outlet before the filter (32).

11. Method according to any of the preceding claims, **characterized in that** the hub diameter is constant.

12. Method according to any of the preceding claims, **characterized in that** the extruder (31) is a single screw extruder, preferably a single screw extruder with a thread of regular pitch.

13. Method according to any of the preceding claims, **characterized in that** the extruder (31) is supplied with a wet natural rubber coagulum with a humidity rate varying from 12% to 40%.

14. Method for processing of natural rubber, **characterised in that** it comprises the following successive steps:

> a. Cleaning, homogenisation and coagulation of natural rubber;
> b. Decontamination by the method defined in any of claims 1 to 13;

c. Drying of the decontaminated natural rubber.

15. System comprising a grooved (3121) sheath (312) extruder (31), a filter (32) installed at the extruder (31) outlet and in some cases a gear pump (33),

the extruder (31) comprising a grooved (3121) sheath (312), a screw (313) arranged in the sheath (312) and comprising a hub and a thread which extends radially outwardly relative to the hub,
a grooved (3121) sheath (312) having an axially symmetrical structure, preferably cylindrical, comprising in its thickness grooves (211, 212) opening on the inner surface of the sheath (312),
each groove (211, 212) comprising

- a bottom face (14) delimited by two bottom ridges (132, 133),
- two side faces (122, 123) extending towards the inside from the bottom face (14), each being delimited by a bottom ridge (132, 133) and a ridge (112, 113) intersecting the inner surface of the sheath (312),

**characterized in that** the sheath (312) is such that, in any plane perpendicular to the axis of the sheath (312), R expressed in mm being the distance between the sheath (312) centre and the inner surface of the sheath (312):

a. the ratio (total length of groove openings expressed in mm )/($2\pi R$), designated A, is at least equal to 0.25 and at most equal to 0.9, preferably is at least equal to 0.3 and at most equal to 0.7, more preferably is at least equal to 0.45 and at most equal to 0.55;
b. the ratio (number of grooves/2R), designated B, is greater than or equal to 0.1;
c. the ratio (depth of grooves expressed in mm)/(2R), designated C, is greater than 0.02, and
d. the plane passing through the two bottom ridges (132, 133) forming, with each plane passing through a bottom ridge (132, 133) and an intersection ridge (112, 113) delimiting a side face (122, 123), an angle $\delta$ at least equal to 60° and at most equal to 90°.

Figure 1

Figure 2

Figure 3A

Figure 3B

EP 3 280 581 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0613924 A
- FR 2320135
- EP 492425 A

- WO 9956938 A
- DE 102013106337
- JP 2004195675 A